(19) Europäisches Patentamt
European Patent Office
Office européen des brevets

(11) EP 0 680 975 B1

# (12) EUROPÄISCHE PATENTSCHRIFT

(45) Veröffentlichungstag und Bekanntmachung des Hinweises auf die Patenterteilung:
**28.01.1998 Patentblatt 1998/05**

(51) Int Cl.[6]: **C08B 37/16**

(21) Anmeldenummer: **95105919.5**

(22) Anmeldetag: **20.04.1995**

## (54) Acylierte gamma-Cyclodextrine

Acylated gamma-cyclodextrins

Gamma-cyclodextrines acylées

(84) Benannte Vertragsstaaten:
**BE DE FR GB IT NL**

(30) Priorität: **22.04.1994 DE 4414138**

(43) Veröffentlichungstag der Anmeldung:
**08.11.1995 Patentblatt 1995/45**

(73) Patentinhaber: **Consortium für elektrochemische Industrie GmbH**
**D-81379 München (DE)**

(72) Erfinder: **Hirsenkorn, Rolf, Dr.**
**D-81477 München (DE)**

(74) Vertreter: **Potten, Holger et al**
**Wacker-Chemie GmbH**
**Zentralabteilung Patente,**
**Marken und Lizenzen**
**Hanns-Seidel-Platz 4**
**81737 München (DE)**

(56) Entgegenhaltungen:
**US-A- 5 288 916**

- **JOURNAL OF THE AMERICAN CHEMICAL SOCIETY, Bd. 71, Nr. 1, 26.Januar 1949 DC US, Seiten 353-356, D. FRENCH ET AL. 'Studies on the Schardinger Dextrins.'**
- **DATABASE WPI Week 9407 Derwent Publications Ltd., London, GB; AN 053986 & JP-A-06 009 709 (TOPPAN PRINTING CO LTD) , 18.Januar 1994**

EP 0 680 975 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft acylierte γ-Cyclodextrine, Verfahren zu ihrer Herstellung und ihre Verwendung.

Cyclodextrine sind cyclische Oligosaccharide, die aus 6, 7 oder 8 α(1-4)-verknüpften Anhydroglucoseeinheiten aufgebaut sind. Die durch enzymatische Stärkekonversion hergestellten α-, β- oder γ-Cyclodextrine unterscheiden sich in dem Durchmesser ihrer Kavität. Sie eignen sich generell zum Einschluß von zahlreichen hydrophoben Gastmolekülen unterschiedlicher Größe.

Natives γ-Cyclodextrin (γ-CD) ist mit einer Löslichkeit von 18,7 Gew.% allerdings vergleichsweise schlecht wasserlöslich und auch seine Solubilisierungskapazität ist vergleichsweise gering. So ist beispielsweise aus US 4,764,604 Spalte 1, letzter Abschnitt, Spalte 7/8 Tabelle bekannt, daß γ-CD nur im unteren Konzentrationsbereich solubilisiert und daß bei höheren Konzentrationen die Komplexe häufig ausfallen. Aus US-4,764,604 ist ferner bekannt, daß Löslichkeit und Solubilisierungseigenschaften von γ-CD durch Etherbildung verbessert werden können. Bekannt ist, daß Methyl-γ-CD eine hohe Wasserlöslichkeit und mittlere Solubilisierungseigenschaften besitzt. Hydroxypropyl-γ-CD-Derivate zeigen gute Hämolyseeigenschaften aber nur mittlere Solubilisierungseigenschaften.

γ-CD Ether, wie die beispielhaft genannten, sind zudem nachteiligerweise biologisch schlecht abbaubar.

Journal of the Chemical Society, Bd. 71, S. 353-356, offenbart die Peracetylierung von Dextrinen zum Zwecke der Strukturaufklärung. Die Acetylierung erfolgt mit Essigsäureanhydrid im überschuß und Natriumacetat. Die erhaltenen Produkte haben eine DS von 3.

Das Derwent Abstract 94-053986 zur japanischen Patentanmeldung JP-A-6009709 offenbart die Herstellung von selektiv in Position 6 substituierten Cyclodextrin-Derivaten.

US-A 5288916 offenbart die Trennung von Enantiomeren mittels γ-Cyclodextrinderivaten. Bei dem in der Schrift offenbarten γ-Cyclodextrinderivat handelt es sich um ein peracetyliertes Derivat.

Aufgabe der Erfindung war es, γ-CD-Derivate zur Verfügung zu stellen, die bessere Solubilisierungseigenschaften haben als Hydroxypropyl-γ-CD-Derivate, gleichzeitig gute Hämolyseeigenschaften besitzen, gut wasserlöslich und zudem biologisch gut abbaubar sind.

Die Aufgabe wird gelöst durch acylierte Cyclodextrine der Formel:

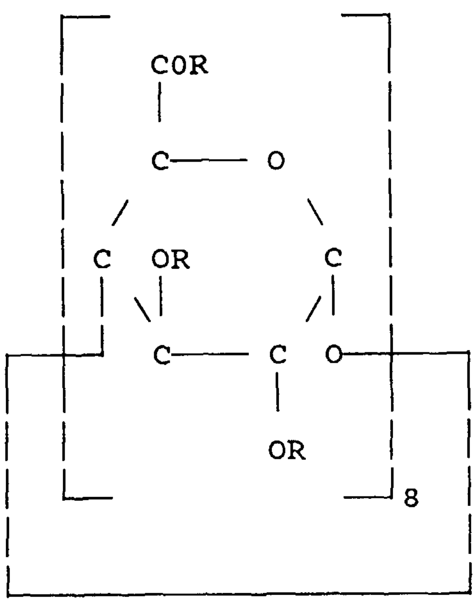

(I),

wobei R Wasserstoff oder R1 bedeutet und

R1 gleich oder verschieden ist und Acetyl, Propionyl, Butyryl, 2-Alkoxyacetyl, 2-Chloracetyl, 2-Fluoracetyl, 2-N-Acetylaminoacetyl, Methacryloyl oder Acryloyl bedeutet und der DS für R1, gemessen mittels $^1$H-NMR-Spektroskopie, zwischen 0,3 und 2,0 liegt und die Substituentenverteilung randomisiert und die Hydroxygruppe in Position 6 der Glucosen zu weniger als 90 % substituiert ist.

Vorzugsweise bedeutet R1 in Formel I Acetyl, Propionyl, oder Butyryl, besonders bevorzugt bedeutet R1 in Formel I Acetyl.

Vorzugsweise liegt der DS für R1 zwischen 0,4 und 1,6, besonders bevorzugt zwischen 0,6 und 1,4.

Vorzugsweise ist die Hydroxygruppe in Position 6 der Glucosen zu weniger als 85 %, insbesondere zu weniger

als 80 %, substituiert.

Die erfindungsgemäßen γ-Cyclodextrin-Derivate zeigen gleichzeitig gute Wasserlöslichkeit, gute Solubilisierungseigenschaften und gute Hämolyseeigenschaften. Zudem sind sie biologisch abbaubar und werden durch Esterasen und Lipasen, also in der freien Natur und auch im Magen-Darm-Trakt zum γ-Cyclodextrin metabolisiert, welches bekanntermaßen günstige toxikologische Eigenschaften hat (G.Antlsperger, Minutes of the 6th International Symposium on Cyclodextrins, Chicago, 21-24 April 1992, Editions de Sante, Paris, 277)

Die erfindungsgemäßen Cyclodextrin-Derivate vereinigen somit gute Produkteigenschaften mit guten toxikologischen Eigenschaften, wobei insbesondere die Derivate mit einem DS für R1 zwischen 0,90 und 1,20 besonders geeignet sind.

Gemische aus acylierten Cyclodextrinen werden durch ihren durchschnittlichen Substitutionsgrad (DS-Wert; average degree of substitution) charakterisiert. Der DS-Wert gibt an, wieviele Substituenten im Schnitt pro Anhydroglucose gebunden sind.

Die Bestimmung des DS-Wertes kann beispielsweise mittels $^1$H-NMR-Spektroskopie in einem geeigneten Lösungsmittel wie Dimethylsulfoxid/Trifluoressigsäure erfolgen. Zur Bestimmung des DS-Wertes werden die Signale der Acylgruppen (Int.-Ac) und der Zuckerprotonen (Int.-Zu) integriert, durch die Zahl der Protonen des Acylsubstituenten bzw. der Zuckerprotonen geteilt und ins Verhältnis gesetzt.

Die Bestimmung des DS ist ebenso aus der Substituentenverteilung heraus möglich. Auf Grund ihrer Struktur können Cyclodextrine an der O2-, O3- und/oder an der O6-Position substituiert werden. Die Bestimmung des DS-Wertes ist beispielsweise dadurch möglich, daß die Produkte methyliert und anschließend zu den Glucoseeinheiten hydrolysiert und durch Reduktion und Acetylierung zu den D-Glucitolacetaten umgewandelt werden (P. Mischnick, Analysis of the Substitution Pattern of Chemically Modified Cyclodextrins in Dominique Duchene, New Trends in Cyclodextrins and Derivatives, Editions des Santes, Paris). Eine gaschromatographische Auftrennung liefert die molaren Anteile der im folgenden aufgelisteten, insgesamt 8 theoretisch möglichen Glucoseeinheiten in den jeweiligen Cyclodextrin-Derivaten.

| Anzahl der Acetoxygruppen | Bezeichnung | D-Glucitolacetat |
|---|---|---|
| 3 | S2,3,6 | D-Glucitol-hexaacetat |
| 2 | S3,6 | 1,3,4,5,6-Penta-O-acetyl-2-mono-O-methyl-D-Glucitol |
| 2 | S2,6 | 1,2,4,5,6-Penta-O-acetyl-3-mono-O-methyl-D-Glucitol |
| 2 | S2,3 | 1,2,3,4,5-Penta-O-acetyl-6-mono-O-methyl-D-Glucitol |
| 1 | S6 | 1,4,5,6-Tetra-O-acetyl-2,3-di-O-methyl-D-Glucitol |
| 1 | S3 | 1,3,4,5-Tetra-O-acetyl-2,6-di-O-methyl-D-Glucitol |
| 1 | S2 | 1,2,4,5-Tetra-O-acetyl-3,6-di-O-methyl-D-Glucitol |
| 0 | S0 | 1,4,5-Tri-O-acetyl-2,3,6-tri-O-methyl-D-Glucitol |

Aus den ermittelten mol%-Anteilen der jeweiligen Glucoseeinheiten läßt sich auch der durchschnittliche Substitutionsgrad der einzelnen Positionen errechnen. Diese mittlere Wahrscheinlichkeit X einer Substitution in einer bestimmten Position errechnet sich wie im folgenden für X6 (mittlere Wahrscheinlichkeit einer Substitution in der O6-Position) dargestellt:

$$X6 = mol\%\ S6 + mol\%\ S2{,}6 + mol\%\ S3{,}6 + mol\%\ S2{,}3{,}6;$$

Analog lassen sich die durchschnittlichen Substitutionsgrade für eine Substitution in O2- und O3-Position berechnen. Über die Substituentenverteilung kann auch der Substitutionsgrad bestimmt werden.

Die Erfindung betrifft ferner Verfahren zur Herstellung von acylierten γ-Cyclodextrinderivaten, gemäß Anspruch 1 oder 2, die dadurch gekennzeichnet sind, daß γ-Cyclodextrin mit mindestens einem Acylierungsmittel in Gegenwart eines basischen Katalysators umgesetzt wird.

Im erfindungsgemäßen Verfahren ist γ-Cyclodextrin in handelsüblicher Qualität mit einem Wassergehalt zwischen 0 und 16 % einsetzbar. Das Cyclodextrin kann jedoch ebenso in an sich bekannter Weise, beispielsweise durch enzymatische Umsetzung von Stärke mit Cyclodextrin Glycosyltransferase (CGTase E.C.2.4.1.19), hergestellt werden. Aus Kostengründen wird vorteilhafterweise γ-Cyclodextrin mit einem Wassergehalt von ca. 6 bis 12 % wie es handelsüblich ist, eingesetzt (erhältlich z.B. unter der Bezeichnung GAMMA W8 bei der Wacker-Chemie GmbH, München).

Als Acylierungsmittel wird vorzugsweise mindestens ein Carbonsäureanhydrid oder eine Carbonsäure eingesetzt. Besonders bevorzugt werden Essigsäureanhydrid, Propionsäureanhydrid, Buttersäureanhydrid, 2 -Chloressigsäureanhydrid, 2-Fluoressigsäureanhydrid, Acrylsäureanhydrid, Methacrylsäureanhydrid, oder die korrespondierenden Carbonsäuren, einzeln oder in beliebiger Mischung eingesetzt. Insbesondere wird Essigsäureanhydrid oder Essigsäure eingesetzt.

Als Katalysator werden vorzugsweise die Alkalisalze der zu den Carbonsäureanhydriden korrespondierenden Säuren beispielsweise Natriumacetat, Kaliumacetat, Natriumpropionat, Kaliumpropionat, Natriumbutyrat, Kaliumbutyrat und/oder tertiäre Amine wie beispielsweise Triethylamin oder Pyridin und/oder basische Ionenaustauscher (z.B. Amberlyst A21 oder Amberlite IRA-93 der Fa. Rohm & Haas) eingesetzt. Besonders bevorzugt wird Natriumacetat eingesetzt.

Die Acylierung ist direkt im Acylierungsmittel, ohne zusätzliches Lösungsmittel möglich.

Vorteilhaft hinsichtlich der Produktfärbung ist es, wenn man mit mindestens einem inerten Lösungsmittel verdünnt. Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Beispiele für geeignete inerte Lösungsmittel sind Essigsäure, Propionsäure, Buttersäure, Formamid, Methylformamid, Dimethylformamid, N-Methylpyrrolidon, DMPU (1,3-Dimethyl-3,4,5,6-tetra-hydro-2(1H) -pyrimidinon), Acetamid, Methylacetamid oder Dimethylacetamid.

Besonders vorteilhaft ist es, wenn man bei Verwendung von Carbonsäureanhydrid als Acylierungsmittel zur Verdünnung als Lösungsmittel die dem Acylierungsmittel entsprechende Carbonsäure einsetzt, also beispielsweise bei Essigsäureanhydrid als Acylierungsmittel, Essigsäure als Lösungsmittel.

Vorzugsweise werden pro Mol γ-Cyclodextrin 2-35 mol, bevorzugt 3 - 20 mol, besonders bevorzugt 5 - 15 mol, des Acylierungsmittels eingesetzt. Die eingesetzten Molverhältnisse werden dabei je nach angestrebtem Substitutionsgrad und Wassergehalt des verwendeten Cyclodextrins gewählt.

Vorzugsweise werden pro Mol γ-Cyclodextrin 0,01-5 mol, bevorzugt 0,5 - 3 mol mindestens eines der genannten Katalysatoren eingesetzt.

Vorzugsweise werden γ-Cyclodextrin und Reaktionsmedium in einem Mengenverhältnis γ-CD/Reaktionsmedium von 1:0,5 bis 1:10, vorzugsweise etwa 1:1 bis 1:6 eingesetzt, wobei unter Reaktionsmedium die Summe in Gramm aus Acylierungsmittel und Lösungsmittel zu verstehen ist. Das Reaktionsmedium wird vorzugsweise weitgehend wasserfrei eingesetzt.

Zur Herstellung der erfindungsgemäßen γ-Cyclodextrine werden Cyclodextrin, Acylierungsmittel, Katalysator und Reaktionsmedium in den angegebenen Verhältnissen entweder gleichzeitig oder nacheinander zusammengegeben. Die Entfernung des Reaktionswassers begünstigt die Einbaurate an Acylierungsmittel.

Vorzugsweise wird das Acylierungsmittel zum Gemisch der übrigen Komponenten bei erhöhter Temperatur (ca. 80°C bis 120°C) zugetropft, um die exotherme Reaktion unter Kontrolle zu halten.

Das Reaktionsgemisch, in der Regel eine Suspension wird bei erhöhter Temperatur (Temp. ca. 80°C bis 150°C ) gerührt. Das Ende der Reaktion ist in der Regel durch das Aufklaren des Reaktionsgemisches charakterisiert, da die anfängliche Suspension in Lösung geht.

Die Aufarbeitung erfolgt durch Abdestillieren der flüchtigen Komponenten im Teilvakuum, der Rückstand wird in Wasser aufgenommen und erneut im Teilvakuum eingedampft. Diese Verfahrensschritte werden vorzugsweise mehrfach, beispielsweise dreifach wiederholt.

Die so erhaltene wäßrige Lösung enthaltend die erfindungsgemäßen acylierten γ-Cyclodextrine, kann mittels bekannter Verfahren (beispielsweise zur Entfernung von Salzen oder Lösungsmittel-Resten durch Fällungsmethoden oder Dialyse) weiter gereinigt und getrocknet (beispielsweise Gefriertrocknung, Sprühtrocknung) werden.

Das erfindungsgemäße Verfahren ist somit ein einfaches Herstellungsverfahren für erfindungsgemäße acylierte γ-Cyclodextrin-Derivate ohne aufwendige Reinigungsschritte. Es ermöglicht die direkte Herstellung von acylierten CD in nur einem Reaktionsschritt durch die Umsetzung von nativem CD mit Acylierungsmitteln in Gegenwart eines Katalysators.

Das erfindungsgemäße Verfahren ist vorteilhaft, weil gemäß den in der Cellulosechemie bisher verwendeten Verfahren (z.B. K. Blaser et al., "Cellulose Esters" in Ullmanns Encyklopedia of Industrial Chemistry, 5. Edition Ed. E. Gerhartz, VCH Verlagsgesellschaft, Weinheim, 1986, pp. 419-459) normalerweise zunächst hoch acylierte Produkte hergestellt werden, welche nachträglich bis zum gewünschten Substitutionsgrad hydrolysiert werden.

Das erfindungsgemäße Verfahren vermeidet die Bildung von Hydrolyseprodukten durch die Umgehung des Hydrolyseschrittes und vermindert damit Reinigungsprobleme.

Durch einfache Variation des Acyldonors ist das erfindungsgemäße Verfahren flexibel und allgemein verwendbar. Das Verfahren ist wirtschaftlich. Es arbeitet katalytisch, als stöchiometrische Nebenprodukte entstehen leicht flüchtige Verbindungen, welche einfach destillativ abgetrennt werden können. Der durch das Verfahren erzielte Umsatz ist quantitativ.

Eine weitere Aufreinigung der Cyclodextrin-Derivate erfolgt, falls erwünscht, mittels an sich bekannter Verfahren wie beispielsweise durch Fällung, Ionenaustauscherchromatographie, Dialyse, Säulenchromatographie oder präparative HPLC.

Die erfindungsgemäßen Cyclodextrin-Derivate eignen sich für alle bekannten Anwendungen von Cyclodextrinen

und Cyclodextrin-Derivaten.

Sie eignen sich insbesondere

- zur Solubilisierung von schwer wasserlöslichen Verbindungen wie beispielsweise Steroiden,
- als Formulierungshilfsmittel vorzugsweise in pharmazeutischen, kosmetischen und agrochemischen Produkten,
- zur Stabilisierung von licht-, wärme-, oder oxidationsempfindlichen Stoffen,
- zur kontrollierten Freisetzung von pharmazeutischen Wirkstoffen, agrochemischen Wirkstoffen wie Insektiziden oder Fungiziden und Duftstoffen, insbesondere für Kosmetik oder Haushalt,
- zur Entfettung und Reinigung von beliebigen Oberflächen,
- zum Ersatz von organischen Lösungsmitteln insbesondere bei der Trennung und Extraktion von Substanzen aus lipophilen Medien,
- als Hilfsstoffe, insbesondere bei der Beschichtung und/oder Haftvermittlung in der Papier-, Leder- und Textilindustrie,
- zur Rheologie-Modifikation
- als Phasentransfer-Katalysator
- sowie zur Geschmacks- und Geruchsmaskierung.

Insbesondere Acetyl Acetyl-γ-Cyclodextrine eignen sich ausgezeichnet zur Verwendung im pharmazeutischen Bereich. Beispielsweise eignen sie sich zur Solubilisierung von Pharmawirkstoffen wie beispielsweise Steroiden, Alkaloiden, Vitaminen, antirheumatischen Verbindungen, Herzglycosiden oder Psychopharmaka etwa Tranquilizern oder Neuroleptika.

Die folgenden Beispiele dienen der weiteren Erläuterung der Erfindung.

Der Reaktionsverlauf der in den Beispielen beschriebenen Umsetzungen wurde mittels Dünnschichtchromatographie kontrolliert. Die Substanzen müssen vor der Dünnschichtchromatographie beispielsweise durch Fällung mit Aceton isoliert werden. Die in den Beispielen genannten DS Werte wurden mittels $^1$H-NMR-Spektroskopie (Lösungsmittel Dimethylsulfoxid/Trifluoressigsäure) ermittelt.

Beispiel 1: Herstellung von Acetyl-γ-CD (DS 1,17),

200 g (135,4 mmol) γ-CD (12,2% Wasser) und 20 g (244,3 mmol) Natriumacetat wurden in 282 ml Essigsäure suspendiert und auf 105°C erwärmt. 141 g (1382 mmol) Essigsäureanhydrid wurden zur gut gerührten Suspension über einen Zeitraum von etwa einer Stunde langsam zugetropft. Der Ansatz erwärmte sich dabei auf Rückflußtemperatur (117°C). Anschließend wurde unter Rückfluß gekocht, wobei das Reaktionsgemisch langsam in Lösung ging. Nach ca. 13 h war die Umsetzung beendet. Der Ansatz kühlte auf Raumtemperatur ab.

Zum Reaktionsgemisch wurden 50 ml Wasser zugetropft. Die Essigsäure wurde weitgehend einrotiert. (T= 80° C, 100 mm Hg). Dann wurde das Produkt in 200 ml Wasser gelöst und einrotiert. Dieser Schritt wurde insgesamt 3 mal durchgeführt. Zum Schluß wurde das Produkt in 400 g Wasser gelöst. Das so erhaltene Produkt hatte einen DS von 1,17.

Beispiel 2: Herstellung von Acetyl-γ-CD (DS 0,83)

Wie in Beispiel 1 beschrieben, wurden 100 g (67,7 mmol) γ-CD (12,2% Wasser), 45 g (441 mmol) Essigsäureanhydrid, 220 ml Essigsäure und 10 g (122,1 mmol) Natriumacetat umgesetzt. Nach ca. 14 h war die Umsetzung beendet. Die weitere Aufarbeitung erfolgte wie in Beispiel 1 beschrieben. Das Produkt hatte einen DS von 0,83.

Beispiel 3: Herstellung von Acetyl-γ-CD (DS 0,95)

Wie in Beispiel 1 beschrieben, wurden 200 g (135,4 mmol) γ-CD (12,4% Wasser), 130 g (1274 mmol) Essigsäureanhydrid, 382 ml Essigsäure und 20 g (244,3 mmol) Natriumacetat umgesetzt. Nach ca. 16 h war die Umsetzung beendet. Die weitere Aufarbeitung erfolgte wie in Beispiel 1 beschrieben. Das Produkt hatte einen DS von 0,95.

Beispiel 4: Herstellung von weiteren Acetyl-γ-CD Derivaten

Wie in Beispiel 1 beschrieben, wurden Acetyl-γ-CD Derivaten mit einem DS von 1,11, 1,00, 1,36, 0,90 hergestellt.

(DS 1,11: 100 g (72,5 mmol) γ-CD (Wassergehalt 6%), 52,1 g (511 mmol) Essigsäureanhydrid, 180 ml Essigsäure, 6 g (73 mmol) Natriumacetat; 117°C; 24 h)

(DS 1,00: 200 g (134,1 mmol) γ-CD (13% Wasser) 82,1 g (800 mmol) Essigsäureanhydrid, 382 ml Essigsäure, 20

g (243 mmol) Natriumacetat; 105°C; 20 h)
(DS 1,36: 200 g (134,1 mmol) γ-CD (13% Wasser), 191,6 g (1880 mmol) Essigsäureanhydrid, 382 ml Essigsäure, 20 g (243 mmol) Natriumacetat; 117°C; 16 h)
(DS 0,90: 100 g (67,1 mmol) γ-CD, 55,5 g (544 mmol) Essigsäureanhydrid, 200 ml Essigsäure, 10 g (122 mmol) Natriumacetat; 117°C; 20 h)

Beispiel 5: Herstellung von Acetyl-γ-CD (DS 0,95)

100 g (73,08 mmol) γ-CD (5,2% Wasser) und 15 g (244,3 mmol) Natriumacetat wurden in 350 ml Essigsäure suspendiert und auf T = 117°C (Rückflußtemperatur) erwärmt. Es wurde unter Rückfluß gekocht, wobei das Reaktionsgemisch langsam in Lösung ging (ca. 18,5 h). Nach Aufklaren der Reaktionsmischung wurde noch 1 h weitergekocht. Der Ansatz wurde auf Raumtemperatur abgekühlt.

Die Essigsäure wurde weitgehend einrotiert (T = 80°C, 100 mm Hg). Das Produkt wurde in 200 ml Wasser gelöst und einrotiert. Dieser Vorgang wurde insgesamt dreimal durchgeführt. Zum Schluß wurde das Produkt in 400 g Wasser gelöst. Das so erhaltene Produkt hatte einen DS von 0,95.

Beispiel 6: Herstellung von Propionyl-γ-CD (DS 0,85)

100 g (67,7 mmol) γ-CD (12,3 % Wasser), 109,7 g (843 mmol) Propionsäureanhydrid, 6 g (73,8 mmol) Natriumacetat und 100 ml Propionsäure wurden analog Beispiel 1 umgesetzt und aufgearbeitet. Die Reaktionstemperatur betrug 140°C, die Reaktionszeit war 15 h.

Das so erhaltene Produkt hatte einen DS von 0,85.

Beispiel 7: Bestimmung der Substituentenverteilung der gemäß Beispiel 1 bis 5 hergestellten Produkte.

5 mg der Probe gemäß Beispiel 1 bis 5 wurden in ein 4 ml Reacti-Vial (Reaktionsgefäß) eingewogen dazu wurde 1 ml Trimethylphosphat pipettiert. Der Ansatz wurde gegebenenfalls im Ultraschallbad für kurze Zeit gelöst.

Es wurden 100 µl Methyltrifluormethansulfonat und 150 µl 2,6-di-tertbutylpyridin hinzugefügt, jeweils mit 1 Rührer versehen, gut verschlossen und im Wasserbad bei 50°C zwei Stunden reagieren gelassen. Das Gemisch wurde mit 20 ml Wasser bidest. quantitativ in einen 50 ml Schütteltrichter gespült und mit 5 ml Chloroform 1 mal gut ausgeschüttelt.

Die unterste Schicht wurde in ein Reacti-Vial abgelassen und mit $N_2$-Gas bis zur Trockene bei Raumtemperatur verdampft.

Hydrolyse

Die Probe aus dem Methylierungsschritt wurde mit Trifluoressigsäure bis zur Marke 4ml aufgefüllt, verschlossen und 4 Stunden bei 110°C erhitzt. Nach dem Abkühlen auf ca. 60°C wurde die Trifluoressigsäure mit Stickstoff abgeblasen (trocken). Den Rückstand versetzte man 3 mal mit ca. 25 ml Dichlormethan und blies jeweils mit Stickstoff ab.

Reduktion

Zum Hydrolyse-Rückstand gab man 0,25 ml einer 0,5 m Na-Borhydridlösung in $NH_4OH$ und erwärmt mindestens 1 Stunde bei 60°C. Das überschüssige Reagenz wurde nach Erkalten, durch Zugabe von Eisessig zerstört, bis zum Umschütteln keine Gasentwicklung mehr auftrat. Durch wiederholte Zugabe von ca. 2%igem essigsauren Methanol und anschließendem Abblasen mit Stickstoff wurde das Borat als Borsäuremethylester entfernt: 6 mal wurde jeweils bis zur Marke 4 ml aufgefüllt, und jeweils bis (fast) zur Trockene eingeengt.

Acetylierung

Nach dem Abkühlen wurden 25 µl Pyridin und 200 µl Acetanhydrid zugegeben. Das Reacti-Vial wurde verschlossen 3 h bei 100°C in den Trockenschrank gestellt.

Nach dem Abkühlen wurde vorsichtig ca. 1-2 ml gesättigte Natriumhydrogencarbonatlösung hinzugefügt und schnell verschlossen. In ein zweites Reaktionsgefäß kamen 1 ml $CHCl_3$ und etwas $NaHCO_3$-Lösung. Die Lösung aus dem ersten Gefäß wurde vorsichtig in das zweite gegossen, verschlossen, etwas geschüttelt, gelüftet, dann gut geschüttelt. Die wässrige Phase wurde abpipettiert und verworfen. Das erste Gefäß wurde zweimal ausgespült und damit wurde der Ausschüttelungsvorgang ca. 3 mal wiederholt. Dem so gereinigten Chloroform wurde $CaCl_2$ zugesetzt, evtl. noch etwas $CHCl_3$ zugefügt und mit einer Glasspitze die Lösung herausgeholt, um sie in ein Probengläschen zu pipettieren. Anschließend erfolgte die GC-Analyse.

Die Substituentenverteilung ist in Tabelle 1 wiedergegeben.

Tab.1:

| Substituenten-verteilung AC-γ-CD | | SO | S3 | S2 | S6 |
|---|---|---|---|---|---|
| Beispiel 2 | AC-γ-CD(0,83) | 26,45% | 3,45% | 0,75% | 57,55% |
| Beispiel 4 | AC-γ-CD(0,90) | 19,65% | 3,70% | 0,75% | 60,70% |
| Beispiel 1 | AC-γ-CD(1,17) | 14,95% | 2,85% | 2,30% | 57,45% |
| Beispiel 3 | AC-γ-CD(0,95) | 23,75% | 2,65% | 2,25% | 55,00% |
| Beispiel 4 | AC-γ-CD(1,11) | 15,40% | 3,00% | 2,90% | 49,05% |
| Beispiel 4 | AC-γ-CD(1,0) | 19,45% | 3,05% | 2,75% | 50,70% |
| Beispiel 4 | AC-γ-CD(1,36) | 13,65% | 3,35% | 3,00% | 38,50% |
| Beispiel 5 | AC-γ-CD(0,95) | 23,70% | 2,70% | 2,20% | 56,40% |

| Substituenten-verteilung AC-γ-CD | | S2,3 | S3,6 | S2,6 | S2,3,6 |
|---|---|---|---|---|---|
| Beispiel 2 | AC-γ-CD(0,83) | 1,00% | 7,35% | 2,00% | 1,35% |
| Beispiel 4 | AC-γ-CD(0,90) | 1,10% | 9,55% | 2,20% | 2,35% |
| Beispiel 1 | AC-γ-CD(1,17) | 0,90% | 10,40% | 8,45% | 2,60% |
| Beispiel 3 | AC-γ-CD(0,95) | 0,65% | 7,50% | 6,35% | 1,85% |
| Beispiel 4 | AC-γ-CD(1,11) | 1,05% | 11,80% | 11,60% | 5,15% |
| Beispiel 4 | AC-γ-CD(1,0) | 1,15% | 10,00% | 9,25% | 3,80% |
| Beispiel 4 | AC-γ-CD(1,36) | 2,00% | 15,05% | 13,45% | 10,95% |
| Beispiel 5 | AC-γ-CD(0,95) | 0,70% | 7,00% | 6,10% | 1,40% |

| Substituenten-verteilung AC-γ-CD | | X2 | X3 | X2,3 | X6 |
|---|---|---|---|---|---|
| Beispiel 2 | AC-γ-CD(0,83) | 5,10% | 13,15% | 18,25% | 68,25% |
| Beispiel 4 | AC-γ-CD(0,90) | 6,40% | 16,70% | 23,10% | 74,80% |
| Beispiel 1 | AC-γ-CD(1,17) | 14,25% | 16,75% | 31,00% | 78,90% |
| Beispiel 3 | AC-γ-CD(0,95) | 11,10% | 12,65% | 23,75% | 70,70% |
| Beispiel 4 | AC-γ-CD(1,11) | 20,70% | 21,00% | 41,70% | 77,60% |
| Beispiel 4 | AC-γ-CD(1,0) | 16,95% | 18,00% | 34,95% | 73,75% |
| Beispiel 4 | AC-γ-CD(1,36) | 29,40% | 31,35% | 60,75% | 77,95% |
| Beispiel 5 | AC-γ-CD(0,95) | 10,40% | 11,80% | 22,20% | 70,90% |

Beispiel 8: Bestimmung verschiedener Eigenschaften der gemäß Beispiel 1 bis 5 hergestellten Produkte sowie Vergleich mit Produkten des Stands der Technik.

Es wurden die Wasserlöslichkeit, die Solubilisierungskapazität, die hämolytische Aktivität, die enzymatische Abbaubarkeit und die biologische Abbaubarkeit der Produkte bestimmt. Als Produkte des Standes der Technik wurden Methyl-γ-Cyclodextrin (DS 1,8) (Me-gamma CD)und zwei Hydroxypropyl-γ-Cyclodextrinderivate (DS 0,9; DS 0,6) (Hp-gamma-CD) verwendet.

Die Wasserlöslichkeit wurde bei 25°C bestimmt.

Zur Bestimmung der Solubilisierungskapazität für Hydrocortison wurden 30%ige wäßrige Lösungen der Cyclodextrinderivate hergestellt und mit einem Überschuß an Hydrocortison 24h bei 25°C geschüttelt. Nicht gelöstes Inklusionsprodukt wurde durch Filtration mit einem Membranfilter (0.2 µm) abgetrennt. Im Filtrat wurde die Hydrocortison-Konzentration mittels HPLC bestimmt.

Zur Bestimmung der Solubilisierungskapazität für Cholesterin wurden zu je einem ml der 30%igen wäßrigen Lösungen der Cyclodextrinderivate 40 mg Cholesterin zugegeben und über Nacht geschüttelt. Danach wurde der Niederschlag abzentrifugiert.

Zur Cholesterinbestimmung wurden folgende Lösungen angefertigt:

a) Pufferlösung: 1,21 g Tris-Puffer, 430 mg Cholsäure-Natriumsalz und 100 mg ABTS wurden in ca. 80 ml VE-Wasser gelöst und mit 1 M HCl auf pH 7,7 eingestellt. 1,02 g $MgCl_2 \cdot 6 H_2O$ und 40 U Peroxidase wurden zugegeben, der pH-Wert wurde mit 0,1 M HCl auf pH 7,7 korrigiert. Im Meßkolben wurde auf 100 ml mit VE-Wasser aufgefüllt.

b) Cholesterinoxidaselösung:

15000 U Cholesteroloxidase (Sigma (815) (E.C.1.1.3.6) wurde in 1000 ml 1M $(NH_4)_2SO_4$ gegeben.

Zur Cholesterinbestimmung wurden 50 µl der Probenlösung, 3 ml Pufferlösung und 20 µl Cholesterinoxidase-Lösung in ein Reagenzglas pipettiert, mit Parafilm verschlossen, gut durchmischt und 1 h im Wasserbad bei 37-40°C inkubiert.

Der Cholesteringehalt der Lösung wird nach geeigneter Verdünnung photometrisch bestimmt (730 nm).

Die hämolytische Aktivität wurde wie in EP-B-0149197 bestimmt.

Die enzymatische Abbaubarkeit wurde mittels folgenden Ansatzes bestimmt.

2,5 ml 0,1M Tris-Puffer
22,5 ml Wasser
10 mikro-Liter Acetonitril
200 mikro-Liter Acetyl-gamma-CD-Lösung (500 mg/ml)
100 units Enzym

Die biologische Abbaubarkeit wurde mittels des Zahn-Wellens-Tests (OECD Guidelines for testing of Chemicals 302B, Adopted by the Council on 17th July 1992) bestimmt.

Die Wasserlöslichkeit, die Solubilisierungsergebnisse, die Ergebnisse des Zahn-Wellens-Tests (ZaWe-14d) sowie die Hämolyseergebnisse sind in Tabelle 2 aufgeführt.

Tab.2:
Vergleich gamma-Derivate

| | | Wasser-löslichkeit | Solubil'g Hydro.cort. [mg/ml] | Solubil'g Cholesterin [mg/ml] | Abbau ZaWe-14d | Hämolyse 50% bei CD-Konz |
|---|---|---|---|---|---|---|
| Bsp 2 | Ac-gamma-CD(0.83) | 50,00% | 46,6 | 1,09 | 98% | 3,7% |
| Bsp 4 | Ac-gamma-CD(0.87) | 24,50% | 53,7 | 0,44 | | 3,7% |
| Bsp 4 | Ac-gamma-CD(0.90) | 29,90% | 52,7 | 0,90 | 98% | 6,0% |
| Bsp 3 | Ac-gamma-CD(0.95) | >70% | 52,5 | 0,70 | | |
| Bsp 4 | Ac-gamma-CD(1.0) | >68% | 52,4 | | | |
| Bsp 4 | Ac-gamma-CD(1.11) | >70% | 50,2 | 0,37 | | 9,1% |
| Bsp 1 | Ac-gamma-CD(1.17) | >70% | 49,5 | 0,30 | | 8,6% |
| Bsp 4 | Ac-gamma-CD(1.36) | >68% | 39,6 | 0,13 | | 16,0% |
| Bsp 5 | Ac-gamma-CD(0.95) | >70% | 53,4 | | | |
| | Hp-gamma-CD(0.9) | | 28 | 0,04 | 25% | > 30% |
| | Hp-gamma-CD(0.6) | | 41 | 0,10 | | > 30% |
| | Me-gamma-CD(1.8) | | 39,6 | | 14% | 14,9% |

Ac-γ-CD ist durch folgende Enzyme abbaubar:

- Lipolase 100L (Novo Industri, Copenhagen)

- Lipase Pankreas (EC 3.1.1.3), Fa. Sigma Chem. Company
- Esterase aus Schweineleber, Fa. Boehringer Mannheim
- Lipase from Aspergillus Niger, EC 3.1.1.3, Fluka

## Patentansprüche

1. Acylierte Cyclodextrine der Formel:

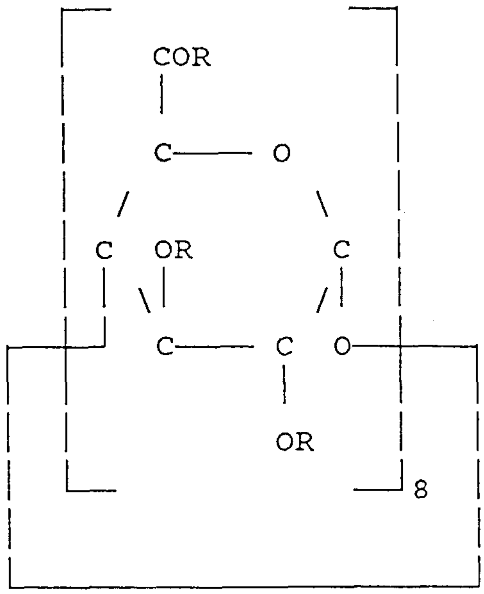

(I),

wobei R Wasserstoff oder R1 bedeutet und
R1 gleich oder verschieden ist und Acetyl, Propionyl, Butyryl, 2-Alkoxyacetyl, 2-Chloracetyl, 2-Fluoracetyl, 2-N-Acetylaminoacetyl, Methacryloyl oder Acryloyl bedeutet und
der DS für R1, gemessen mittels $^1$H-NMR-Spektroskopie, zwischen 0,3 und 2,0 liegt und die Substituentenverteilung randomisiert und die Hydroxygruppe in Position 6 der Glucosen zu weniger als 90% substituiert ist.

2. Acylierte Cyclodextrin-Derivate gemäß Anspruch 1, dadurch gekennzeichnet, daß die Hydroxygruppe in Position 6 der Glucosen zu weniger als 85% substituiert ist.

3. Verfahren zur Herstellung von acylierten γ-Cyclodextrinderivaten gemäß Anspruch 1 oder 2, dadurch gekennzeichnet, daß γ-Cyclodextrin mit mindestens einem Acylierungsmittel in Gegenwart eines basischen Katalysators umgesetzt wird.

4. Verfahren nach Anspruch 3, dadurch gekennzeichnet, daß als Acylierungsmittel Essigsäureanhydrid, Propionsäureanhydrid, Buttersäureanhydrid, 2-Chloressigsäureanhydrid, 2-Fluoressigsäureanhydrid, Acrylsäureanhydrid, Methacrylsäureanhydrid, einzeln oder in beliebiger Mischung eingesetzt werden.

5. Verwendung von Acetyl-γ-CD als Formulierungs hilfsmittel in pharmazeutischen, Kosmetischen und agrochemischen Produkten.

## Claims

1. Acylated cyclodextrins of the formula:

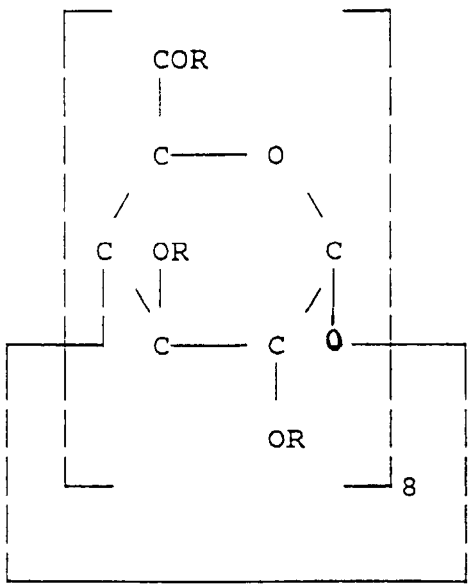

(I),

where R denotes hydrogen or R1, and
R1 is identical or different and denotes acetyl, propionyl, butyryl, 2-alkoxyacetyl, 2-chloroacetyl, 2-fluoroacetyl, 2-N-acetylaminoacetyl, methacryloyl or acryloyl, and
the DS for R1, measured by means of $^{1}H$ NMR spectroscopy, is between 0.3 and 2.0 and the substituent distribution is randomized and the hydroxyl group in position 6 of the glucoses is less than 90%-substituted.

**2.** Acylated cyclodextrin derivatives according to Claim 1, characterized in that the hydroxyl group in position 6 of the glucoses is less than 85%-substituted.

**3.** Process for preparing acylated γ-Cyclodextrin derivatives according to Claim 1 or 2, characterized in that γ-cyclodextrin is reacted with at least one acylating agent in the presence of a basic catalyst.

**4.** Process according to Claim 3, characterized in that acetic anhydride, propionic anhydride, butyric anhydride, 2-chloroacetic anhydride, 2-fluoroacetic anhydride, acrylic anhydride and methacrylic anhydride are employed as acylating agents, either individually or in an arbitrary mixture.

**5.** Use of acetyl-γ-CD as formulation adjuvants in pharmaceutical, cosmetic and agrochemical products.

**Revendications**

**1.** Cyclodextrines acylées de formule :

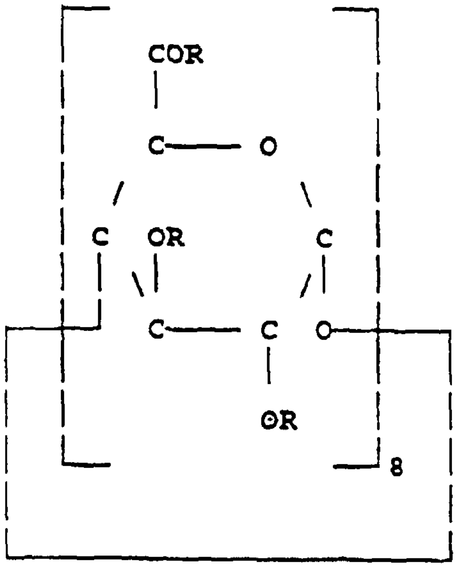

(I),

dans laquelle :

R représente un hydrogène ou R1, et

R1 est identique ou différent et représente un acétyle, un propionyle, un butyryle, un 2-alkoxyacétyle, un 2-chloroacétyle, un 2-fluoroacétyle, un 2-N-acétylaminoacétyle, un méthacryloyle ou un acryloyle, et le DS de R1, mesuré par spectroscopie RMN du $^1H$, se situe entre 0,3 et 2,0, et la distribution des substituants est aléatoire et le groupe hydroxyle en position 6 des glucoses est substitué à moins de 90 %.

**2.** Dérivés acylés de cyclodextrine suivant la revendication 1, caractérisés en ce que le groupe hydroxyle en position 6 des glucoses est substitué à moins de 85 %.

**3.** Procédé de préparation de dérivés acylés de γ-cyclodextrine suivant la revendication 1 ou 2, caractérisé en ce que la γ-cyclodextrine est mise à réagir avec au moins un agent acylant en présence d'un catalyseur basique.

**4.** Procédé suivant la revendication 3, caractérisé en ce que l'on utilise comme agent acylant l'anhydride acétique, l'anhydride propionique, l'anhydride butyrique, l'anhydride 2-chloroacétique, l'anhydride 2-fluoroacétique, l'anhydride acrylique, l'anhydride méthacrylique, individuellement ou en n'importe quel mélange.

**5.** Utilisation d'une acétyl-γ-CD comme adjuvant de formulation dans des produits pharmaceutiques, cosmétiques et agrochimiques.